# EUROPEAN PATENT SPECIFICATION

(11) **EP 4 344 146 B1**
(45) Date of publication and mention of the grant of the patent: **20.08.2025**
(21) Application number: 22844890.8
(22) Date of filing: 13.04.2022
(51) Int. Cl.: H04L 41/04, H04L 69/22, H04L 67/565, H04L 41/0894, H04L 67/12, H04W 4/46, H04W 4/44, H04W 4/38, H04W 28/16, H04L 67/00, H04L 41/5041

(54) **PERCEPTION DATA TRANSMISSION**
VERFAHREN ZUR ÜBERTRAGUNG VON WAHRNEHMUNGSDATEN
PROCÉDÉ DE TRANSMISSION DE DONNÉES DE PERCEPTION

(30) Priority: 22.07.2021 CN 202110834010
(43) Date of publication of application: 27.03.2024
(73) Proprietor: ZTE Corporation, Shenzhen, Guangdong 518057 (CN)
(72) Inventor: XIANG, Haitao, Shenzhen, Guangdong 518057 (CN)
(74) Representative: Mozzi, Matteo
(86) International application number: PCT/CN2022/086691
(87) International publication number: WO 2023/000718

(56) References cited:
- WO-A1-2020/123434
- CN-A- 110 621 045
- CN-A- 112 839 188
- CN-A- 112 913 283
- ANONYMOUS: "Fifth Generation Communication Automotive Research and innovation; Deliverable D4.1.; Initial design of 5G V2X system level architecture and security framework", 5G PPP; V1.0, 30 April 2018 (2018-04-30), XP055809645
- "Intelligent Transport Systems (ITS); Vehicular Communications; Basic Set of Applications; Analysis of the Collective Perception Service (CPS); Release 2", vol. ITS WG1, no. V2.1.1, 18 December 2019 (2019-12-18), pages 1 - 119, XP014360260, Retrieved from the Internet <URL:http://www.etsi.org/deliver/etsi_tr/103500_103599/103562/02.01.01_60/tr_103562v020101p.pdf> [retrieved on 20191218]

## Description

### Technical Field

Embodiments of the present disclosure relate to the fields of communication and networking, and in particular, to a perception data transmission method, an electronic device, and a computer-readable storage medium.

### Background

With the rapid development of communication technologies, wireless communication technologies also have new application scenarios, a typical one of which is the Internet of Vehicles. In the 3rd Generation Partnership Project (3GPP), the Internet of Vehicles is referred to as a Cellular Vehicle to Everything (CV2X), which is based on a cellular network and is a key technology in a future intelligent transportation system. The CV2X technology enables communications between vehicles and vehicles, between vehicles and base stations, and between base stations and base stations, and thus facilitates the acquisition of a series of traffic information, such as real-time road conditions, road information and pedestrian information, thereby improving driving safety, reducing congestion, improving traffic efficiency, and providing vehicle-mounted entertainment information, etc. The CV2X technology makes use of wireless communications between vehicles and vehicles, between vehicles and road infrastructures, and between vehicles and pedestrians, and the V2X technology, in cooperation with the sensor technology, provides a safe driving strategy via network connection, content processing and vehicle warning. However, the evolution of V2X is a sequential and gradual process. At present, 20M bandwidth is available within a V2X band, the theoretical rate is 30 Million bits per second (Mbps), and the actual rate when multiple vehicles are supported concurrently is lower than 30 Mbps. With the increase of the number of vehicle sensors, the volume of perception data is constantly increasing. For example, some vehicles with assisted driving equipment are equipped with over 20 cameras and high-precision radars, assuming that the amount of image data acquired by each 1080P image device per second is 5M, the amount of image data acquired by the vehicle per second exceeds 100M, and the transmission delay of the image data through the conventional V2X network is relatively large.

Document Anonymous: "Fifth Generation Communication Automotive Research and innovation; Deliverable D4.1.; Initial design of 5G V2X system level architecture and security framework", 5G PPP, v1.0, 30 April 2018, provides a first set of the mechanisms for Multi-Radio Access Technology (RAT) interworking, and Quality of Service (QoS) and traffic flow handling.

Document "Intelligent Transport Systems (ITS); Vehicular Communications; Basic Set of Applications; Analysis of the Collective Perception Service (CPS); Release 2", ETSI TECHNICAL REPORT, vol. ITS WG1, n. V2.1.1 18 December 2019, pages 1-119, prepares the specification of Collective Perception Service [i.1] to support applications in the domain of road and traffic safety applications.

### Summary

The embodiments of the present disclosure provide perception data transmission methods and devices according to the independent claims.

### Brief Description of the Drawings

Fig. 1 is a schematic flowchart of a perception data transmission method according to an embodiment of the present disclosure;
Fig. 2 is a schematic flowchart of a perception data transmission method according to another embodiment of the present disclosure;
Fig. 3 is a schematic flowchart of a perception data transmission method according to still another embodiment of the present disclosure;
Fig. 4 is a schematic flowchart of a perception data transmission method according to yet another embodiment of the present disclosure;
Fig. 5 is a schematic architectural block diagram of a perception data transmission system according to yet another embodiment of the present disclosure.

### Detailed Description

In order to enable those skilled in the art to better understand the technical solutions of the present disclosure, a perception data transmission method, an electronic device, and a computer-readable storage medium according to the present disclosure will be described in detail below with reference to the accompanying drawings.

Some embodiments of the present disclosure will be described more fully hereinafter with reference to the accompanying drawings, but the embodiments may be embodied in different forms and should not be construed as limited to the embodiments set forth herein. Rather, these embodiments are provided to make the present disclosure thorough and complete, and will enable those skilled in the art to fully understand the scope of the present disclosure.

The embodiments of the present disclosure and the features in the embodiments can be combined without conflicts.

As used herein, the term "and/or" includes any and all combinations of at least one of the associated listed items.

Terms used herein are only used for describing exemplary embodiments and not intended to limit the present disclosure. As used in the present disclosure, singular forms "a" and "the" are intended to include plural forms as well, i.e., to represent at least one, unless the context clearly defines otherwise. It should further be understood that terms "includes/comprises" and/or "made of/consisted of" in the present disclosure are used to specify a presence of at least one of recited features, integers, steps, operations, elements and/or components, but do not preclude a presence or an addition of at least one of other features, integers, steps, operations, elements, components and/or groups thereof.

Unless otherwise defined, all terms (including technical and scientific terms) used herein have the same meanings as commonly understood by those skilled in the art. It will also be understood that terms such as those defined in commonly used dictionaries should be construed as having meanings consistent with their meanings in the relevant fields and the background of the present disclosure, and will not be construed as having idealized or overly formal meanings, unless explicitly so defined herein.

Currently, automatic driving technologies have been gradually implemented in practical applications, and the automatic driving based on the V2X technology is also gradually deployed. Furthermore, for a long time to come, V2X devices will realize large-area coverage and popularization, and at the same time, the smart automobile will also be equipped with more and more sensing devices. The sensing devices may perceive a large amount of data per second, and how large-scale perception data is shared between V2X networks or V2X devices also becomes a difficult problem. For example, a rear vehicle may request perception data captured by a camera of a front vehicle, or request perception data captured by a camera of a Road Side Unit (RSU), so as to determine the condition of the road ahead based on the perception data photographed by the camera. If the data captured by the camera is transmitted by using the Internet of vehicles, the transmission rate is low, and a large amount of network bandwidth is occupied, which causes a waste of resources.

The embodiments of the present disclosure are applicable to any communication system deployed with a network slicing technology, for example, a 5G Generation Mobile Communication (5G) communication system, and a future communication system.

According to the embodiments of the present disclosure, perception data is transmitted via a network slice. Since the network slice adopts an edge calculation technology, the transmission rate is increased, and the transmission delay is reduced.

The edge calculation technology in the embodiments of the present disclosure refers to a technology that sinks the implementation of a service of a core network to a base station. By virtue of the edge calculation technology, data transmission and processing only need to be performed by the base station, and the transmission and processing in the core network are no longer needed. The embodiments of the present disclosure do not limit the specific implementation means of the edge calculation technology. For example, the embodiments of the present disclosure may be implemented by a base station and an edge cloud server, wherein the base station is responsible for forwarding perception data, and the edge cloud server is responsible for performing related processing on the perception data.

The perception data in the embodiments of the present disclosure refers to perception data in the Internet of Vehicles, that is, perception data acquired for obtaining a series of traffic information such as real-time road conditions, road information and pedestrian information.

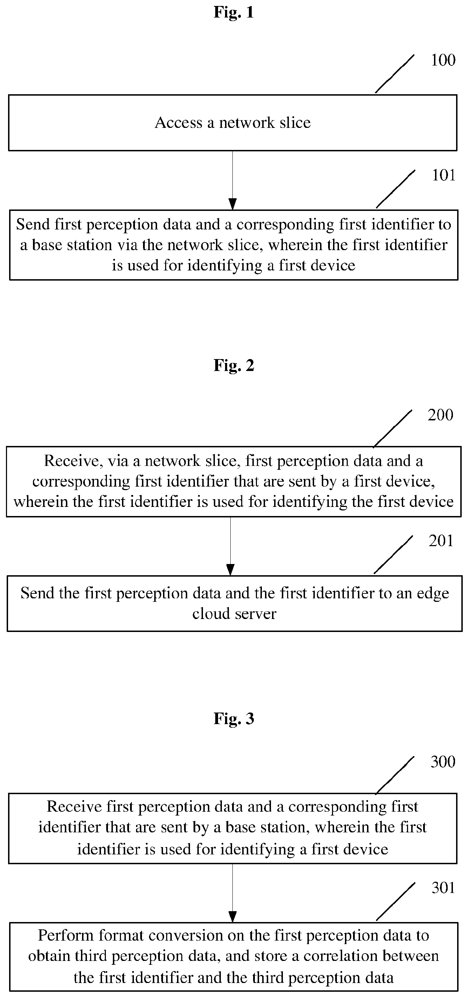

Fig. 1 is a schematic flowchart of a perception data transmission method according to an embodiment of the present disclosure.

In a first aspect, with reference to Fig. 1, the embodiments of the present disclosure provide a perception data transmission method. The method may be performed by a first device and includes the following operations 100 and 101.

At operation 100, the first device accesses a network slice.

In some exemplary embodiments, the first device may be a V2X device, such as an On Board Unit (OBU), a Telematics BOX (TBOX), a Telematics Control Access Network (TCAN), or an in-vehicle infotainment; the first device may alternatively be an RSU, such as a roadside signal lamp, a roadside camera, and various Electronic Toll Collection (ETC); the first device may alternatively be a handheld device or a wearable device of a pedestrian on a road. In some exemplary embodiments, the first device may serve as a source device for acquiring the second perception data.

In some exemplary embodiments, the first device may access the network slice at startup, and may alternatively access the network slice when there is a need to send the first perception data and the first identifier to the base station.

In some exemplary embodiments, the first device may concurrently access multiple types of network slices, such as a network slice for data sharing, a network slice for driving safety, and a network slice for providing vehicle entertainment services. Different types of network slices have different access point names, that is, different types of network slices have different gateway Internet Protocol (IP) addresses. Different types of network slices may provide different types of services. For example, the network slice for driving safety is responsible for sending alarm signals such as the driving speed and warning information within a coverage area; the network slice for data sharing is responsible for performing corresponding processing on perception data of vehicles within a coverage area; and the network slice for providing vehicle entertainment services is responsible for sinking, to an edge cloud server, server entertainment data such as hot application (APP) streaming media, which may increase the forwarding efficiency, and improve the user experience.

The first device may select different types of network slices according to service types. For example, the first device may select a network slice for data sharing when needing to provide a service for sending first perception data and a first identifier to a base station; the first device may select a network slice for providing vehicle entertainment services when needing to provide a service corresponding to an entertainment service request; and the first device may select a network slice for driving safety when needing to provide a data transmission service for vehicle safety data.

In some exemplary embodiments, the network slice is a network slice for data sharing.

In the embodiments of the present disclosure, the first device may access the network slice based on any used network.

At operation 101, the first device sends first perception data and a corresponding first identifier to a base station via the network slice, wherein the first identifier is used for identifying the first device.

The embodiments of the present disclosure do not limit the specific transmission manner of the first identifier when the first perception data and the corresponding first identifier are sent to the base station via the network slice. For example, the first perception data may be carried as a load, and the first identifier may be carried as information in a message header; or the first perception data may be carried as a load, and the first identifier may be added to the first perception data, for example, the first identifier may be included in a file name of the first perception data.

In the embodiments of the present disclosure, the first identifier is information for distinguishing different V2X devices or RSUs or handheld devices or wearable devices in the Internet of vehicles. The embodiments of the present disclosure do not limit the specific form of the first identifier, for example, the first identifier may be information such as electronic vehicle information, a Vehicle Identification Number (VIN), an International Mobile Equipment Identification number (IMEI), a Media Access Control (MAC) address, etc.

In cases where the first device is an OBU, the first identifier may be vehicle license plate information, such as a license plate number; in cases where the first device is an RSU, the first identifier may be an RSU identifier which is uniformly allocated by a cloud server; in cases where the first device is a pedestrian's handheld device or wearable device, the first identifier is a Service Set Identifier (SSID).

In some exemplary embodiments, before sending the first perception data and the corresponding first identifier to the base station via the network slice, the method further includes:
acquiring second perception data within a preset range, wherein the preset range is a range within which the distance to the first device is less than or equal to a preset distance; and
encrypting the second perception data to obtain the first perception data; or encrypting and compressing the second perception data to obtain the first perception data; or compressing the second perception data to obtain the first perception data. Certainly, in other embodiments, the second perception data acquired within the preset range may also be directly used as the first perception data (i.e. without being processed).

In some exemplary embodiments, in order to improve safety, the second perception data is encrypted to obtain the first perception data; or the second perception data is encrypted and compressed to obtain the first perception data.

In the embodiments of the present disclosure, the second perception data may be acquired based on a sensing device or a sensing module connected to the first device, or based on a sensing device or a sensing module installed in the first device. The sensing device or the sensing module may acquire the second perception data under the control of the first device. After acquiring the second perception data, the sensing device or the sensing module sends the second perception data to the first device for storage. The sensing device or the sensing module may be, for example, one or more of a camera, a Light Detection and Ranging (LiDR), a Radio Detection Ranging (radar), a MicroElectro Mechanical System (MEMS), an Inertial Measurement Unit (IMU), ultrasound, a Global Position System (GPS), etc.

In some exemplary embodiments, the second perception data may be perception data such as pictures, videos, or any other form of data associated with the vehicle or traffic.

In some exemplary embodiments, in cases where the first perception data is obtained by encrypting the second perception data, or the first perception data is obtained by encrypting and compressing the second perception data, the decryption key corresponding to the first perception data needs to be notified to the acquisition party of the perception data. As the amount of data of the decryption key is small, the decryption key may be broadcast via the Internet of Vehicles. By virtue of the solution, the separation of the content and the key is achieved, further improving the security. Furthermore, in order to associate the decryption key with the first perception data, an edge cloud server needs to generate a serial number corresponding to the first perception data for distinguishing the first perception data uploaded by the first device at different moments, and send the serial number to the first device through a base station. The first device also broadcasts the serial number while broadcasting the decryption key via the Internet of Vehicles. Furthermore, in order to enable an edge cloud server to perform corresponding processing on the first perception data, the decryption key needs to be sent to the edge cloud server through a base station. In order to improve security, the decryption key needs to be sent to the edge cloud server via a secure transmission channel. That is to say, after sending the first perception data and the corresponding first identifier to the base station via the network slice, the method further includes:
receiving, via the network slice, a serial number sent by the base station, and broadcasting, via Internet of Vehicles, a decryption key and a serial number corresponding to the first perception data; and sending the decryption key to the base station via a secure transmission channel, wherein the serial number is used for distinguishing the first perception data uploaded by the first device at different moments.

In some exemplary embodiments, the second device is assumed to be a target device having a serial number acquisition demand, then, although sending the first perception data and the corresponding first identifier to the base station via the network slice, so as to enable the base station to forward the first perception data and the corresponding first identifier to the second device having the serial number acquisition demand can improve the transmission rate, the transmission process still has a certain time delay. It is also possible that the second device does not need to acquire the sensing data in all cases, but only needs to know the traffic incident identified from the sensing data, thereby taking measures to avoid the traffic incident. In view of the above, after the first perception data and the corresponding first identifier are sent to the base station via the network slice, traffic incident information may be determined according to the second perception data, and the traffic incident information is broadcast via the Internet of Vehicles. In this way, the V2X terminal in the Internet of Vehicles can receive the traffic incident information in time, determine whether it is necessary to acquire the original perception data according to the traffic incident information, and control the vehicle to take further measures.

In some exemplary embodiments, the traffic incident information may include at least one of a name of the traffic incident, whether the subject of the traffic incident is a vehicle or a pedestrian, an identification of a V2X device on the vehicle at which the traffic incident occurred, a time at which the traffic incident occurred, a location at which the traffic incident occurred, etc.

In some exemplary embodiments, the traffic incident may be any traffic incident that may occur, such as running a traffic light, speeding, traffic jam, and vehicle getting rear-ended.

In the embodiments of the present disclosure, the first device may periodically send the first perception data and the corresponding first identifier to the base station via the network slice, or may regularly send the first perception data and the corresponding first identifier to the base station via the network slice, or may send the first perception data and the corresponding first identifier to the base station via the network slice when a perception data acquisition request sent by the second device is received.

In some exemplary embodiments, before sending the first perception data and the corresponding first identifier to the base station via the network slice, the method may further include:
receiving a perception data acquisition request sent by a second device, wherein the perception data acquisition request includes the first identifier and a second identifier, and the second identifier is used for identifying the second device; and
sending the first perception data and the corresponding first identifier to the base station via the network slice includes: sending the first perception data, the first identifier and the second identifier to the base station via the network slice.

In the embodiments of the present disclosure, in cases where the first perception data and the first identifier are sent to the base station via the network slice when the perception data acquisition request sent by the second device is received, the purpose of further sending the second identifier to the base station is to inform the edge cloud server that the first perception data is uploaded based on the request of the second device. In cases where the first perception data and the first identifier are sent to the base station periodically via the network slice, the edge cloud server only needs to perform corresponding processing on the first perception data; and only when being requested by a device requiring the perception data (for example, the second device in the embodiment of the present disclosure), the stored perception data is sent to the device requiring the perception data.

According to the perception data transmission method provided in the embodiments of the present disclosure, perception data is transmitted via a network slice. Since the network slice adopts an edge calculation technology, the transmission rate is increased, and the transmission delay is reduced.

Fig. 2 is a schematic flowchart of a perception data transmission method according to another embodiment of the present disclosure.

In a second aspect, refer to Fig. 2, another embodiment of the present disclosure provides a perception data transmission method performed by a base station, including the following operations 200 and 201.

At operation 200, the base station receives, via a network slice, first perception data and a corresponding first identifier that are sent by a first device, wherein the first identifier is used for identifying the first device.

In some exemplary embodiments, the first device may be a V2X device, such as an On Board Unit (OBU), a Telematics BOX (TBOX), a Telematics Control Access Network (TCAN), or an in-vehicle infotainment; the first device may alternatively be an RSU, such as a roadside signal lamp, a roadside camera, and various Electronic Toll Collection (ETC); the first device may alternatively be a handheld device or a wearable device of a pedestrian on a road.

The embodiments of the present disclosure do not limit the specific transmission manner of the first identifier when the first perception data and the corresponding first identifier that are sent by the first device are received via the network slice. For example, the first perception data may be carried as a load, and the first identifier may be carried as information in a message header; or the first perception data may be carried as a load, and the first identifier may be added to the first perception data, for example, the first identifier may be included in a file name of the first perception data.

In the embodiments of the present disclosure, the first identifier is information for distinguishing different V2X devices or RSUs or handheld devices or wearable devices in the Internet of vehicles. The embodiments of the present disclosure do not limit the specific form of the first identifier, for example, the first identifier may be information such as electronic vehicle information, a Vehicle Identification Number (VIN), an International Mobile Equipment Identification number (IMEI), a Media Access Control (MAC) address, etc.

In cases where the first device is an OBU, the first identifier may be vehicle license plate information, such as a license plate number; in cases where the first device is an RSU, the first identifier may be an RSU identifier which is uniformly allocated by a cloud server; in cases where the first device is a pedestrian's handheld device or wearable device, the first identifier is a Service Set Identifier (SSID).

In some exemplary embodiments, receiving, via the network slice, the first perception data and the corresponding first identifier that are sent by the first device includes: receiving, via the network slice, the first perception data, the first identifier and a second identifier that are sent by the first device, wherein the second identifier is used for identifying a second device.

In the embodiments of the present disclosure, in cases where the first perception data and the first identifier that are sent by the first device are received via the network slice, it indicates that the first device uploads the first perception data and the first identifier periodically via the network slice. In cases where the first perception data, the first identifier and the second identifier that are sent by the first device are received via the network slice, it indicates that the first device uploads the first perception data and the first identifier based on a request of the second device.

In the embodiments of the present disclosure, the second perception data may be acquired based on a sensing device or a sensing module connected to the first device, or based on a sensing device or a sensing module installed in the first device. The sensing device or the sensing module may acquire the second perception data under the control of the first device. After acquiring the second perception data, the sensing device or the sensing module sends the second perception data to the first device for storage. The sensing device or the sensing module may be, for example, one or more of a camera, a Light Detection and Ranging (LiDR), a Radio Detection Ranging (radar), a MicroElectro Mechanical System (MEMS), an Inertial Measurement Unit (IMU), ultrasound, a Global Position System (GPS), etc.

In some exemplary embodiments, the second perception data may be perception data such as pictures, videos, or any other form of data associated with the vehicle or traffic.

In some exemplary embodiments, the network slice is a network slice for data sharing.

At operation 201, the base station sends the first perception data and the first identifier to an edge cloud server.

In some exemplary embodiments, in cases where the first perception data, the first identifier and the second identifier that are sent by the first device are received by a network slice, sending the first perception data and the first identifier to the edge cloud server includes: sending the first perception data, the first identifier and the second identifier to the edge cloud server, so as to inform the edge cloud server that the first device uploads the first perception data based on the perception data obtaining request of the second device, so that the edge cloud server receives the first perception data and performs corresponding processing on the first perception data, and returns the processed perception data, such as the third perception data, to the base station, so that the base station sends the processed perception data to the second device.

In some exemplary embodiments, the first perception data is obtained by encrypting the second perception data; or the first perception data is obtained by compressing second perception data, wherein the second perception data is perception data acquired within a preset range. In cases where the preset range is a range within which the distance to the first device is less than or equal to a preset distance, in order to associate the decryption key with the first perception data, the edge cloud server needs to generate a serial number corresponding to the first perception data so as to distinguish the first perception data uploaded by the first device at different moments, and sends the serial number to the first device through the base station. Furthermore, in order to enable an edge cloud server to perform corresponding processing on the first perception data, a decryption key corresponding to the first perception data needs to be sent to the edge cloud server. In order to improve security, the decryption key needs to be sent to the edge cloud server via a secure transmission channel. That is to say, after sending the first perception data and the first identifier to the edge cloud server, the method further includes:
receiving, via a secure transmission channel, a decryption key sent by the first device and corresponding to the first perception data, and sending the decryption key to the edge cloud server via the secure transmission channel; and
receiving a serial number sent by the edge cloud server, and sending the serial number to the first device via the network slice;
wherein the serial number is used for distinguishing the first perception data uploaded by the first device at different moments.

In some exemplary embodiments, after sending the first perception data to the edge cloud server, the method further includes:
receiving third perception data and a second identifier that are sent by the edge cloud server, wherein the second identifier is used for identifying a second device; and sending the third perception data to the second device, wherein the third perception data is perception data obtained by performing format conversion on the first perception data.

In some exemplary embodiments, in cases where the second device accesses the network slice, the third perception data may be directly sent to the second device; and in cases where the second device does not access the network slice, the third perception data is sent to the RSU closest to the second device, and the RSU sends the third perception data to the second device, or the RSU determines traffic incident information according to the third perception data, and broadcasts the traffic incident information via Internet of Vehicles, so that vehicles near the RSU timely receive the traffic incident information, and the vehicles are controlled to take further measures according to the traffic incident information.

In some exemplary embodiments, the RSU may send the third perception data to the second device via the Internet of Vehicles or other techniques.

In some exemplary embodiments, after sending the first perception data and the first identifier to the edge cloud server, the method further includes:
receiving third perception data, a serial number and a second identifier that are sent by the edge cloud server, wherein the second identifier is used for identifying a second device; and sending the third perception data and the serial number to the second device.

In some exemplary embodiments, in cases where the second device accesses the network slice, the third perception data and the serial number may be directly sent to the second device; and in cases where the second device does not access the network slice, the third perception data and the serial number are sent to the RSU closest to the second device, and the RSU sends the third perception data and the serial number to the second device, or the RSU determines traffic incident information according to the third perception data, and broadcasts the traffic incident information via Internet of Vehicles, so that vehicles near the RSU timely receive the traffic incident information, and the vehicles are controlled to take further measures according to the traffic incident information.

In some exemplary embodiments, the traffic incident information may include at least one of a name of the traffic incident, whether the subject of the traffic incident is a vehicle or a pedestrian, an identification of a V2X device on the vehicle at which the traffic incident occurred, a time at which the traffic incident occurred, a location at which the traffic incident occurred, etc.

In some exemplary embodiments, the traffic incident may be any traffic incident that may occur, such as running a traffic light, speeding, traffic jam, and vehicle getting rear-ended.

In some exemplary embodiments, the RSU may send the third perception data and the serial number to the second device via Internet of Vehicles or other techniques.

According to the perception data transmission method provided in the embodiments of the present disclosure, perception data is transmitted via a network slice. Since the network slice adopts an edge calculation technology, the transmission rate is increased, and the transmission delay is reduced.

Fig. 3 is a schematic flowchart of a perception data transmission method according to still another embodiment of the present disclosure.

According to a third aspect, refer to Fig. 3, another embodiment of the present disclosure provides a perception data transmission method performed by an edge cloud server, including the following operations 300 and 301.

At operation 300, the edge cloud server receives first perception data and a corresponding first identifier that are sent by a base station, wherein the first identifier is used for identifying a first device.

In some exemplary embodiments, the first device may be a V2X device, such as an On Board Unit (OBU), a Telematics BOX (TBOX), a Telematics Control Access Network (TCAN), or an in-vehicle infotainment; the first device may alternatively be an RSU, such as a roadside signal lamp, a roadside camera, and various Electronic Toll Collection (ETC); the first device may alternatively be a handheld device or a wearable device of a pedestrian on a road.

The embodiments of the present disclosure do not limit the specific transmission manner of the first identifier when the first perception data and the corresponding first identifier that are sent by the first device are received via the network slice. For example, the first perception data may be carried as a load, and the first identifier may be carried as information in a message header; or the first perception data may be carried as a load, and the first identifier may be added to the first perception data, for example, the first identifier may be included in a file name of the first perception data.

In the embodiments of the present disclosure, the first identifier is information for distinguishing different V2X devices or RSUs or handheld devices or wearable devices in the Internet of vehicles. The embodiments of the present disclosure do not limit the specific form of the first identifier, for example, the first identifier may be information such as electronic vehicle information, a Vehicle Identification Number (VIN), an International Mobile Equipment Identification number (IMEI), a Media Access Control (MAC) address, etc.

In cases where the first device is an OBU, the first identifier may be vehicle license plate information, such as a license plate number; in cases where the first device is an RSU, the first identifier may be an RSU identifier, which is uniformly allocated by a cloud server; in cases where the first device is a pedestrian's handheld device or wearable device, the first identifier is an SSID.

In some exemplary embodiments, receiving the first perception data and the corresponding first identifier that are sent by the base station includes: receiving the first perception data, the first identifier and a second identifier sent by the base station, wherein the second identifier is used for identifying a second device.

In the embodiments of the present disclosure, in cases where the first perception data and the corresponding first identifier that are sent by the base station are received, it indicates that the first device periodically uploads the first perception data and the first identifier via the network slice; in cases where the first perception data, the first identifier and the second identifier that are sent by the base station are received, it indicates that the first device uploads the first perception data and the first identifier based on a request of the second device.

In the embodiments of the present disclosure, the second perception data may be acquired based on a sensing device or a sensing module connected to the first device, or based on a sensing device or a sensing module installed in the first device. The sensing device or the sensing module may acquire the second perception data under the control of the first device. After acquiring the second perception data, the sensing device or the sensing module sends the second perception data to the first device for storage. The sensing device or sensing module may be, for example, one or more of a camera, LiDR, radar, MEMS, IMU, ultrasound, GPS, etc.

In some exemplary embodiments, the second perception data may be perception data such as pictures, videos, or any other form of data associated with the vehicle or traffic.

At operation 301, the edge cloud server performs format conversion on the first perception data to obtain third perception data, and stores a correlation between the first identifier and the third perception data.

In some exemplary embodiments, in cases where the first perception data is obtained by compressing the second perception data, performing format conversion on the first perception data to obtain the third perception data includes:
decompressing first perception data to obtain second perception data, performing format conversion on the second perception data to obtain fifth perception data, and compressing the fifth perception data to obtain the third perception data.

In some exemplary embodiments, in cases where the first perception data is obtained by encrypting the second perception data, performing format conversion on the first perception data to obtain the third perception data includes: receiving, via a secure transmission channel, a decryption key sent by the base station and corresponding to the first perception data; decrypting the first perception data by using the decryption key to obtain the second perception data; performing format conversion on the second perception data to obtain fourth perception data; and encrypting the fourth perception data to obtain the third perception data;
after performing format conversion on the first perception data to obtain the third perception data, the method further includes: generating a serial number corresponding to the third perception data, and sending the serial number to the base station, wherein the serial number is used for distinguishing the first perception data uploaded by the first device at different moments;
storing the correlation between the first identifier and the third perception data includes: storing a correlation between the first identifier, the third perception data and the serial number.

In some exemplary embodiments, in cases where the first perception data is obtained by encrypting the second perception data, performing format conversion on the first perception data to obtain the third perception data includes: receiving, via a secure transmission channel, a decryption key sent by the base station and corresponding to the first perception data; decrypting the first perception data by using the decryption key to obtain the second perception data; performing format conversion on the second perception data to obtain fourth perception data; compressing the fourth perception data to obtain sixth perception data; and encrypting the sixth perception data to obtain the third perception data;
after performing format conversion on the first perception data to obtain the third perception data, the method further includes: generating a serial number corresponding to the third perception data, and sending the serial number to the base station, wherein the serial number is used for distinguishing the first perception data uploaded by the first device at different moments;
storing the correlation between the first identifier and the third perception data includes: storing a correlation between the first identifier, the third perception data and the serial number.

In some exemplary embodiments, in cases where the first perception data is obtained by encrypting and compressing the second perception data, performing format conversion on the first perception data to obtain the third perception data includes: receiving, via a secure transmission channel, a decryption key sent by the base station and corresponding to the first perception data; decrypting and decompressing the first perception data by using the decryption key to obtain the second perception data; performing format conversion on the second perception data to obtain fourth perception data; and encrypting the fourth perception data to obtain the third perception data;
after performing format conversion on the first perception data to obtain the third perception data, the method further includes: generating a serial number corresponding to the third perception data, and sending the serial number to the base station, wherein the serial number is used for distinguishing the first perception data uploaded by the first device at different moments;
storing the correlation between the first identifier and the third perception data includes: storing a correlation between the first identifier, the third perception data and the serial number.

The embodiments of the present disclosure do not limit the specific form of format conversion, for example, the resolution and encoding format of a picture or video may be uniformly converted.

In some exemplary embodiments, in cases where the first perception data is obtained by encrypting and compressing the second perception data, performing format conversion on the first perception data to obtain the third perception data includes: receiving, via a secure transmission channel, a decryption key sent by the base station and corresponding to the first perception data; decrypting and decompressing the first perception data by using the decryption key to obtain the second perception data; performing format conversion on the second perception data to obtain fourth perception data; compressing the fourth perception data to obtain sixth perception data; and encrypting the sixth perception data to obtain the third perception data;
after performing format conversion on the first perception data to obtain the third perception data, the method further includes: generating a serial number corresponding to the third perception data, and sending the serial number to the base station, wherein the serial number is used for distinguishing the first perception data uploaded by the first device at different moments;
storing the correlation between the first identifier and the third perception data includes: storing a correlation between the first identifier, the third perception data and the serial number.

The embodiments of the present disclosure do not limit the specific form of format conversion, for example, the resolution and encoding format of a picture or video may be uniformly converted.

In some exemplary embodiments, in cases where the first perception data, the first identifier and the second identifier that are sent by the base station are received, it indicates that the first device uploads the first perception data based on a request of the second device. For the cases where the first perception data is obtained by encrypting second perception data, or the first perception data is obtained by encrypting and compressing the second perception data, after a correlation between the first identifier, the third perception data and the serial number is stored, the third perception data, the serial number and the second identifier need to be sent to the base station, in this way, the base station may send the third perception data and the serial number to the second device, so that the second device may obtain, based on the serial number, a decryption key matching the third perception data.

In some exemplary embodiments, in cases where the second device directly requests the edge cloud server for the perception data, and the first perception data is obtained by encrypting the second perception data, or the first perception data is obtained by encrypting and compressing the second perception data, after the correlation between the first identifier, the third perception data and the serial number is stored, the method further includes:
receiving a perception data acquisition request sent by a second device, wherein the perception data acquisition request includes a first identifier and a second identifier, wherein the first identifier is used for identifying a first device, and the second identifier is used for identifying a second device; and
searching the correlation for the third perception data and the serial number that correspond to the first identifier, and sending the found third perception data, the found serial number and the second identifier to the base station.

In some exemplary embodiments, in cases where the first device uploads the first perception data based on a request of the second device, and the first perception data is used as the second perception data, or the first perception data is obtained by compressing the second perception data, receiving the first perception data and the first identifier that are sent by the base station includes: receiving the first perception data, the first identifier and a second identifier sent by the base station, wherein the second identifier is used for identifying a second device;
after storing the correlation between the first identifier and the third perception data, the method further includes: sending the third perception data and the second identifier to the base station.

In some exemplary embodiments, in cases where the second device directly requests the edge cloud server for the perception data, and the first perception data is used as the second perception data, or the first perception data is obtained by compressing the second perception data, after the correlation between the first identifier and the third perception data is stored, the method further includes:
receiving a perception data acquisition request sent by a second device, wherein the perception data acquisition request includes a first identifier and a second identifier, wherein the first identifier is used for identifying a first device, and the second identifier is used for identifying a second device;
searching the correlation for the third perception data corresponding to the first identifier, and sending the found third perception data and the second identifier to the base station.

In some exemplary embodiments, in cases where the first device leaves a signal coverage range of the base station, the method further includes:
deleting the correlation, between the first identifier and the third perception data, corresponding to the first device.

According to the perception data transmission method provided in the embodiments of the present disclosure, perception data is transmitted via a network slice. Since the network slice adopts an edge calculation technology, the transmission rate is increased, and the transmission delay is reduced.

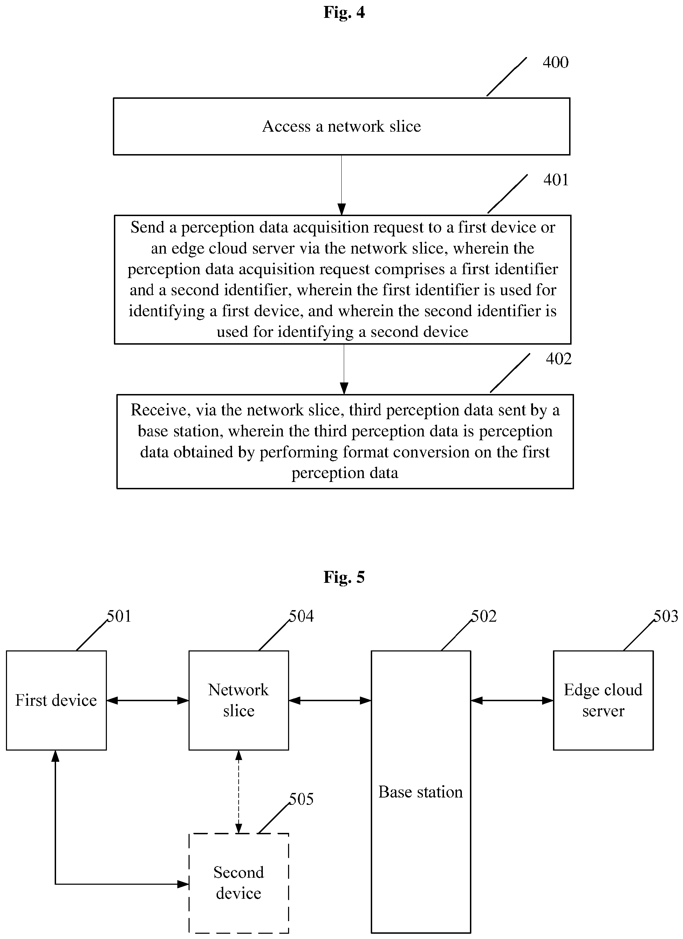

Fig. 4 is a schematic flowchart of a perception data transmission method according to yet another embodiment of the present disclosure.

In a fourth aspect, refer to Fig. 4, another embodiment of the present disclosure provides a perception data transmission method performed by a second device, including the following operations 400 to 402.

At operation 400, the second device accesses a network slice.

In some exemplary embodiments, the network slice is a network slice for data sharing.

At operation 401, the second device sends a perception data acquisition request to a first device or an edge cloud server via the network slice, wherein the perception data acquisition request includes a first identifier and a second identifier, wherein the first identifier is used for identifying a first device, and the second identifier is used for identifying the second device.

In some exemplary embodiments, the first device may be a V2X device, such as an On Board Unit (OBU), a Telematics BOX (TBOX), a Telematics Control Access Network (TCAN), or an in-vehicle infotainment; the first device may alternatively be an RSU, such as a roadside signal lamp, a roadside camera, and various Electronic Toll Collection (ETC); the first device may alternatively be a handheld device or a wearable device of a pedestrian on a road.

In the embodiments of the present disclosure, the first identifier is information for distinguishing different V2X devices or RSUs or handheld devices or wearable devices in the Internet of vehicles. The embodiments of the present disclosure do not limit the specific form of the first identifier, for example, the first identifier may be information such as electronic vehicle information, a Vehicle Identification Number (VIN), an International Mobile Equipment Identification number (IMEI), a Media Access Control (MAC) address, etc.

In cases where the first device is an OBU, the first identifier may be vehicle license plate information, such as a license plate number; in cases where the first device is an RSU, the first identifier may be an RSU identifier which is uniformly allocated by a cloud server; in cases where the first device is a pedestrian's handheld device or wearable device, the first identifier is an SSID.

In the embodiments of the present disclosure, the second identifier is information for distinguishing different V2X devices or RSUs or handheld devices or wearable devices in the Internet of vehicles. The embodiments of the present disclosure do not limit the specific form of the second identifier, for example, the second identifier may be information such as electronic vehicle information, a VIN, an IMEI and an MAC address.

In cases where the second device is an OBU, the second identifier may be vehicle license plate information, such as a license plate number; in cases where the second device is an RSU, the second identifier may be an RSU identifier which is uniformly allocated by a cloud server; in cases where the second device is a pedestrian's handheld device or wearable device, the second identifier is an SSID.

At operation 402, the second device receives, via the network slice, third perception data sent by a base station, wherein the third perception data is perception data obtained by performing format conversion on the first perception data.

In some exemplary embodiments, in cases where the first perception data is obtained by compressing the second perception data, after sending the perception data acquisition request to the first device or then edge cloud server via the network slice, the method further includes:
after receiving, via the network slice, the third perception data sent by the base station, the method further includes:
decompressing the third perception data to obtain fifth perception data.

In some exemplary embodiments, in cases where the first perception data is obtained by encrypting the second perception data, after sending the perception data acquisition request to the first device or then edge cloud server via the network slice, the method further includes:
receiving, via Internet of vehicles, a decryption key and a serial number which are broadcast by a first device;
receiving, via the network slice, the third perception data sent by the base station includes: receiving, via the network slice, third perception data and a serial number which are sent by the base station; and
after receiving, via the network slice, the third perception data sent by the base station, the method further includes: in cases where the serial number received via the Internet of Vehicles and the serial number received via the network slice are the same, decrypting the third perception data by using the decryption key to obtain fourth perception data or sixth perception data; and decrypting the sixth perception data to obtain the fourth perception data.

In some exemplary embodiments, in cases where the first perception data is obtained by encrypting and compressing the second perception data, after sending the perception data acquisition request to the first device or then edge cloud server via the network slice, the method further includes:
receiving, via Internet of vehicles, a decryption key and a serial number which are broadcast by a first device;
receiving, via the network slice, the third perception data sent by the base station includes: receiving, via the network slice, the third perception data and a serial number which are sent by the base station; and
after receiving, via the network slice, the third perception data sent by the base station, the method further includes: in cases where the serial number received via the Internet of Vehicles and the serial number received via the network slice are the same, decrypting the third perception data by using the decryption key to obtain fourth perception data or sixth perception data; and decrypting the sixth perception data to obtain the fourth perception data.

In some exemplary embodiments, after sending the perception data acquisition request to the first device or then edge cloud server via the network slice, the method further includes:
receiving, via Internet of Vehicles, traffic incident information which is broadcast by the first device and determined according to the second perception data.

In some exemplary embodiments, it is determined, according to traffic incident information, whether it is necessary to acquire original perception data corresponding to the traffic incident information, i.e. the second perception data. In cases where it is determined, according to the traffic incident information, that it is necessary to acquire the original perception data corresponding to the traffic incident information, the operation of sending the perception data acquisition request to the first device or then edge cloud server via the network slice is continued to be executed. In cases where it is determined, according to the traffic incident information, that it is unnecessary to acquire the original perception data corresponding to the traffic incident information, the procedure is ended.

According to the perception data transmission method provided in the embodiments of the present disclosure, perception data is transmitted via a network slice. Since the network slice adopts an edge calculation technology, the transmission rate is increased, and the transmission delay is reduced.

In a fifth aspect, the embodiments of the present disclosure provide an electronic device, including at least one processor and at least one memory. The memory stores at least one program, and when the at least one program is executed by at least one processor, any one of the described perception data transmission methods is implemented.

The processor is a device with a data processing capability, and includes, but is not limited to, a Central Processing Unit (CPU), etc.; the memory is a device with data storage capability, and includes, but is not limited to, a Random Access Memory (RAM, more specifically, such as an SDRAM and a DDR), a Read-Only Memory (ROM), an Electrically Erasable Programmable Read-Only Memory (EEPROM), and a flash memory (FLASH).

In some embodiments, the processor, the memory, and other components of the computing device are connected to each other via a bus.

According to a sixth aspect, the embodiments of the present disclosure provide a computer-readable storage medium, the computer-readable storage medium stores a computer program, and the computer program, when being executed by the processor, implements any one of the perception data transmission methods. In an implementation, the non-transient software programs and instructions required for implementing the perception data transmission method according to the embodiments are stored in the memory, when the programs and instructions are executed by the processor, the perception data transmission method of the embodiments is executed, for example, the method operations 100 to 101 in Fig. 1 or the method operations 200 to 201 in Fig. 2, the method operations 300 to 301 in Fig. 3, and the method operations 400 to 402 in Fig. 4 are executed.

Fig. 5 is a schematic architectural block diagram of a perception data transmission system according to yet another embodiment of the present disclosure.

In a seventh aspect, refer to Fig. 5, another embodiment of the present disclosure provides a perception data transmission system. The system may include: a first device 501, a base station 502, and an edge cloud server 503.

In some exemplary embodiments, the first device 501 is configured to access the network slice 504 and send the first perception data and the corresponding first identifier to the base station 502 via the network slice 504, wherein the first identifier is used for identifying the first device. The first device 501 may access the network slice 504 via any suitable network.

The base station 502 is configured to receive, via the network slice 504, the first perception data and the corresponding first identifier that are sent by the first device 501, and send the first perception data and the first identifier to the edge cloud server 503.

The edge cloud server 503 is configured to receive the first perception data and the first identifier that are sent by the base station, perform format conversion on the first perception data to obtain third perception data, and store a correlation between the first identifier and the third perception data.

In some exemplary embodiments, the first device 501 may serve as a source device for acquiring second perception data, and acquire the second perception data within a preset range (the second perception data may be acquired by using a sensing device installed in the first device 501 or an external sensing device with respect to the first device 501), wherein the preset range is a range within which the distance to the first device is less than or equal to a preset distance. The first device 501 may use the second perception data as the first perception data; or encrypt the second perception data to obtain the first perception data; or compress the second perception data to obtain the first perception data; or encrypt and compress the second perception data to obtain the first perception data.

In some exemplary embodiments, in cases where the first perception data is obtained by encrypting the second perception data and the second perception data is the acquired perception data, the edge cloud server 503 further generates a serial number corresponding to the third perception data, and may send the serial number to the base station 502; the serial number is used for distinguishing the first perception data uploaded by the first device 501 at different moments; and a correlation between the first identifier, the third perception data and the serial number is stored.

The base station 502 receives the serial number sent by the edge cloud server 503, and may send the serial number to the first device 501 via the network slice 504.

The first device 501 receives, via a network slice 504, the serial number sent by the base station 502, and broadcasts, via Internet of Vehicles (not shown), a decryption key and a serial number corresponding to the first perception data; and sends the decryption key to the base station 502 via a secure transmission channel.

The base station 502 may receive, via a secure transmission channel, a decryption key sent by the first device 501 and corresponding to the first perception data, and sending the decryption key to the edge cloud server 503 via the secure transmission channel.
the edge cloud server 503 may receive, via a secure transmission channel, a decryption key sent by the base station 502 and corresponding to the first perception data; decrypt the first perception data by using the decryption key to obtain the second perception data; perform format conversion on the second perception data to obtain fourth perception data; and encrypt the fourth perception data to obtain the third perception data;

In some exemplary embodiments, the system may further include a second device 505, and the second device 505 may serve as a requesting device having a data acquisition demand. That is to say, the second device 505 may further send a perception data acquisition request to the first device 501 via the network slice 504, wherein the perception data acquisition request includes a first identifier and a second identifier, wherein the first identifier is used for identifying the first device, and the second identifier is used for identifying a second device.

The first device 501 may send the first perception data, the corresponding first identifier, and the second identifier to the base station 502 via the network slice 504 in the case of receiving the perception data acquisition request sent by the second device 505.

The base station 502 is configured to receive, via the network slice 504, the first perception data, the corresponding first identifier, and the second identifier that are sent by the first device 501, and send the first perception data, the first identifier, and the second identifier to the edge cloud server 503.

The edge cloud server 503 receives the first perception data, the first identifier and the second identifier that are sent by the base station, performs format conversion on the first perception data to obtain third perception data, stores a correlation between the first identifier and the third perception data, and sends the third perception data and the second identifier to the base station 502.

The base station 502 receives the third perception data and the second identifier that are sent by the edge cloud server 503, and sends the third perception data to the second device 505 via the network slice 504.

In some exemplary embodiments, the first device 501 may also determine traffic incident information according to the second perception data, and broadcast the traffic incident information via Internet of Vehicles (not shown).

The second device 505 may receive, via Internet of Vehicles, the traffic incident information that is broadcast by the first device 501 and determined according to the second perception data, and determine, according to the traffic incident information, whether to send a perception data acquisition request to the first device 501.

In some exemplary embodiments, the second device 505 may also send a perception data acquisition request to the edge cloud server, wherein the perception data acquisition request includes a first identifier and a second identifier, wherein the first identifier is used for identifying the first device, and the second identifier is used for identifying the second device.

The edge cloud server 503 may search, in cases where a perception data acquisition request sent by the second device is received, the correlation for the third perception data corresponding to the first identifier, and send the found third perception data and the second identifier to the base station 502.

The base station 502 receives the third perception data and the second identifier that are sent by the edge cloud server, and sends the third perception data to the second device 505 via the network slice 504.

The exemplary implementation process of the above perception data transmission apparatus is the same as the exemplary implementation process of the perception data transmission method in the described embodiment, and will not be repeated here.

A person skilled in the art could understand that the functional modules/units in all or some of the operations, systems and apparatuses of the methods disclosed above can be implemented as software, firmware, hardware, and any suitable combination thereof. In a hardware embodiment, the division of functional modules/units mentioned in the description above does not necessarily correspond to the division of physical components; for example, one physical component may have multiple functions, or one function or operation may be performed cooperatively by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to a person skilled in the art, the term "computer storage medium" includes transitory and non-transitory, removable and non-removable medium implemented in any method or technology for storing information (such as computer-readable instructions, data structures, program modules, or other data). The computer storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, as is well known to a person skilled in the art, the communication medium typically includes computer-readable instructions, data structures, program modules, or other data in a modulated data signal such as a carrier or other transmission mechanisms, and may include any information delivery medium.

Exemplary embodiments have been disclosed herein, and although specific terms are used, they are used for and should be interpreted as general illustrative meanings only, and are not intended for limiting purposes. In some examples, it is obvious to those skilled in the art that, unless expressly stated otherwise, the features, characteristics and/or elements described in conjunction with an exemplary embodiment may be used alone, or may be used in combination with other features, characteristics and/or elements described in conjunction with other embodiments.

## Claims

1. A perception data transmission method performed by a first device, comprising:
accessing (100) a network slice; and
sending (101) first perception data and a corresponding first identifier to a base station via the network slice, wherein the first identifier is used for identifying the first device,
wherein before sending (101) the first perception data and the corresponding first identifier to the base station via the network slice, the method further comprises:
acquiring second perception data within a preset range, wherein the preset range is a range within which the distance to the first device is less than or equal to a preset distance; and encrypting the second perception data to obtain the first perception data, or encrypting and compressing the second perception data to obtain the first perception data; and **characterised by**:
wherein after sending the first perception data and the corresponding first identifier to the base station via the network slice, the method further comprises: receiving, via the network slice, a serial number sent by the base station, and broadcasting, via Internet of Vehicles, a decryption key corresponding to the first perception data and the serial number; and sending the decryption key to the base station via a secure transmission channel, wherein the serial number is used for distinguishing the first perception data uploaded by the first device at different moments.

2. The perception data transmission method according to claim 1, wherein before sending the first perception data and the corresponding first identifier to the base station via the network slice, the method further comprises:
receiving a perception data acquisition request sent by a second device, wherein the perception data acquisition request comprises the first identifier and a second identifier, and the second identifier is used for identifying the second device; and
sending the first perception data and the corresponding first identifier to the base station via the network slice comprises: sending the first perception data, the first identifier and the second identifier to the base station via the network slice.

3. The perception data transmission method according to claim 1, wherein after sending (101) the first perception data and the corresponding first identifier to the base station via the network slice, the method further comprises:
determining traffic incident information according to the second perception data, and broadcasting the traffic incident information via Internet of Vehicles.

4. A perception data transmission method performed by a base station, comprising:
receiving (200), via a network slice, first perception data and a corresponding first identifier that are sent by a first device, wherein the first identifier is used for identifying the first device; the first perception data is obtained by encrypting second perception data, or the first perception data is obtained by encrypting and compressing the second perception data, wherein the second perception data is perception data acquired within a preset range, and the preset range is a range within which the distance to the first device is less than or equal to a preset distance;
sending (201) the first perception data and the first identifier to an edge cloud server;
**characterised by**:
receiving, via a secure transmission channel, a decryption key sent by the first device and corresponding to the first perception data, and sending the decryption key to the edge cloud server via the secure transmission channel; and
receiving a serial number sent by the edge cloud server, and sending the serial number to the first device via the network slice, wherein the serial number is used for distinguishing the first perception data uploaded by the first device at different moments.

5. The perception data transmission method according to claim 4, wherein after sending (201) the first perception data to the edge cloud server, the method further comprises: receiving third perception data and a second identifier that are sent by the edge cloud server, wherein the second identifier is used for identifying a second device; and sending the third perception data to the second device, wherein the third perception data is perception data obtained by performing format conversion on the first perception data;
or, after sending (201) the first perception data and the first identifier to the edge cloud server, the method further comprises: receiving third perception data, a serial number and a second identifier that are sent by the edge cloud server, wherein the second identifier is used for identifying a second device; and sending the third perception data and the serial number to the second device.

6. The perception data transmission method according to claim 4, wherein receiving (200), via the network slice, the first perception data and the corresponding first identifier that are sent by the first device comprises: receiving, via the network slice, the first perception data, the first identifier and a second identifier that are sent by the first device, wherein the second identifier is used for identifying a second device; and
sending the first perception data and the first identifier to the edge cloud server comprises: sending the first perception data, the first identifier and the second identifier to the edge cloud server.

7. A perception data transmission method performed by an edge cloud server, comprising:
receiving (300) first perception data and a corresponding first identifier that are sent by a base station, wherein the first identifier is used for identifying a first device, wherein the first perception data is obtained by encrypting second perception data, wherein the second perception data is perception data acquired within a preset range, and the preset range is a range within which the distance to the first device is less than or equal to a preset distance;
performing (301) format conversion on the first perception data to obtain third perception data, and storing (301) a correlation between the first identifier and the third perception data, wherein performing (301) format conversion on the first perception data to obtain the third perception data comprises: receiving, via a secure transmission channel, a decryption key sent by the base station and corresponding to the first perception data; decrypting the first perception data by using the decryption key to obtain the second perception data; performing format conversion on the second perception data to obtain fourth perception data; and encrypting the fourth perception data to obtain the third perception data; and
generating a serial number corresponding to the third perception data, and sending the serial number to the base station, wherein the serial number is used for distinguishing the first perception data uploaded by the first device at different moments;
wherein storing the correlation between the first identifier and the third perception data comprises: storing a correlation between the first identifier, the third perception data and the serial number.

8. The perception data transmission method according to claim 7, wherein receiving (300) the first perception data and the corresponding first identifier that are sent by the base station comprises: receiving the first perception data, the first identifier and a second identifier sent by the base station, wherein the second identifier is used for identifying a second device;
after storing the correlation between the first identifier, the third perception data and the serial number, the method further comprises: sending the third perception data, the serial number and the second identifier to the base station;
after storing the correlation between the first identifier, the third perception data and the serial number, the method further comprises:
receiving a perception data acquisition request sent by the second device, wherein the perception data acquisition request comprises the first identifier and the second identifier, wherein the first identifier is used for identifying the first device, and the second identifier is used for identifying the second device; and
searching the correlation for the third perception data and the serial number that correspond to the first identifier, and sending the found third perception data, the found serial number and the second identifier to the base station.

9. The perception data transmission method according to claim 7, wherein
receiving (300) the first perception data and the corresponding first identifier that are sent by the base station comprises: receiving the first perception data, the first identifier and a second identifier sent by the base station, wherein the second identifier is used for identifying a second device; after storing the correlation between the first identifier and the third perception data, the method further comprises: sending the third perception data and the second identifier to the base station;
or,
after storing (301) the correlation between the first identifier and the third perception data, the method further comprises: receiving a perception data acquisition request sent by a second device, wherein the perception data acquisition request comprises a first identifier and a second identifier, wherein the first identifier is used for identifying the first device, and the second identifier is used for identifying the second device; searching the correlation for the third perception data corresponding to the first identifier, and sending the found third perception data and the second identifier to the base station.

10. A perception data transmission method performed by a second device, comprising:
accessing (400) a network slice; and
sending (401) a perception data acquisition request to a first device or an edge cloud server via the network slice, wherein the perception data acquisition request comprises a first identifier and a second identifier, the first identifier is used for identifying the first device, and the second identifier is used for identifying the second device; and
receiving (402), via the network slice, third perception data sent by a base station, wherein the third perception data is perception data obtained by performing format conversion on the first perception data, wherein the first perception data is obtained by encrypting second perception data, wherein the second perception data is perception data acquired within a preset range, and the preset range is a range within which the distance to the first device is less than or equal to a preset distance;
wherein after sending (401) the perception data acquisition request to the first device or the edge cloud server via the network slice, the method further comprises: receiving, via Internet of Vehicles, a decryption key and a serial number which correspond to the first perception data and broadcast by the first device, wherein the serial number is used for distinguishing the first perception data uploaded by the first device at different moments;
receiving (402), via the network slice, the third perception data sent by the base station comprises: receiving, via the network slice, the third perception data and a serial number which are sent by the base station; and
after receiving (402), via the network slice, the third perception data sent by the base station, the method further comprises: in cases where the serial number received via the Internet of Vehicles and the serial number received via the network slice are the same, decrypting the third perception data by using the decryption key to obtain fourth perception data or sixth perception data; and decrypting the sixth perception data to obtain the fourth perception data.

11. The perception data transmission method according to claim 10, wherein before sending (401) the perception data acquisition request to the first device or the edge cloud server via the network slice, the method further comprises:
receiving, via the Internet of Vehicles, traffic incident information broadcast by the first device and determined according to the second perception data.

12. A first electronic device (501), comprising:
at least one processor; and
a memory storing at least one program, wherein the at least one program, when executed by the at least one processor, implements the perception data transmission method according to any one of claims 1-3.

13. A base station 502, comprising:
at least one processor; and
a memory storing at least one program, wherein the at least one program, when executed by the at least one processor, implements the perception data transmission method according to any one of claims 4-6.

14. An edge cloud server (503), comprising:
at least one processor; and
a memory storing at least one program, wherein the at least one program, when executed by the at least one processor, implements the perception data transmission method according to any one of claims 7-9.

15. A second electronic device (505), comprising:
at least one processor; and
a memory storing at least one program, wherein the at least one program, when executed by the at least one processor, implements the perception data transmission method according to any one of claims 10-11.

## Patentansprüche

1. Verfahren zur Übertragung von Wahrnehmungsdaten, das von einer ersten Vorrichtung ausgeführt wird, umfassend:
Zugreifen (100) auf einen Netzwerk-Slice; und
Senden (101) erster Wahrnehmungsdaten und einer entsprechenden ersten Kennung an eine Basisstation über den Netzwerk-Slice, wobei die erste Kennung zur Identifizierung der ersten Vorrichtung verwendet wird,
wobei das Verfahren, vor dem Senden (101) der ersten Wahrnehmungsdaten und der entsprechenden ersten Kennung an die Basisstation über den Netzwerk-Slice ferner umfasst:
Erfassen zweiter Wahrnehmungsdaten innerhalb eines vorgegebenen Bereichs, wobei der vorgegebene Bereich ein Bereich ist, in dem der Abstand zu der ersten Vorrichtung kleiner oder gleich einem vorgegebenen Abstand ist; und Verschlüsseln der zweiten Wahrnehmungsdaten, um die ersten Wahrnehmungsdaten zu erhalten, oder Verschlüsseln und Komprimieren der zweiten Wahrnehmungsdaten, um die ersten Wahrnehmungsdaten zu erhalten; und **gekennzeichnet durch** Folgendes:
wobei das Verfahren, nach dem Senden der ersten Wahrnehmungsdaten und der entsprechenden ersten Kennung an die Basisstation über den Netzwerk-Slice, ferner umfasst: Empfangen, über den Netzwerk-Slice, einer Seriennummer, die von der Basisstation gesendet wird und Übertragen, über das Internet der Fahrzeuge (IoV) eines Entschlüsselungsschlüssels, der den ersten Wahrnehmungsdaten und der Seriennummer entspricht; und Senden des Entschlüsselungsschlüssels über einen sicheren Übertragungskanal an die Basisstation, wobei die Seriennummer zum Unterscheiden der ersten Wahrnehmungsdaten verwendet wird, die von der ersten Vorrichtung zu verschiedenen Zeitpunkten hochgeladen werden.

2. Verfahren zur Übertragung von Wahrnehmungsdaten nach Anspruch 1, wobei das Verfahren, vor dem Senden der ersten Wahrnehmungsdaten und der entsprechenden ersten Kennung an die Basisstation über den Netzwerk-Slice, ferner umfasst:
Empfangen einer Wahrnehmungsdaten-Erfassungsanforderung, die von einer zweiten Vorrichtung gesendet wird, wobei die Wahrnehmungsdaten-Erfassungsanforderung die erste Kennung und eine zweite Kennung umfasst, wobei die zweite Kennung zur Identifizierung der zweiten Vorrichtung verwendet wird; und
Senden der ersten Wahrnehmungsdaten und der entsprechenden ersten Kennung an die Basisstation über den Netzwerk-Slice umfasst: Senden der ersten Wahrnehmungsdaten, der ersten Kennung und der zweiten Kennung an die Basisstation über den Netzwerk-Slice.

3. Verfahren zur Übertragung von Wahrnehmungsdaten nach Anspruch 1, wobei das Verfahren, nach dem Senden (101) der ersten Wahrnehmungsdaten und der entsprechenden ersten Kennung an die Basisstation über den Netzwerk-Slice, ferner umfasst:
Bestimmen Verkehrsunfallinformationen nach den zweiten Wahrnehmungsdaten und Übertragen der Verkehrsunfallinformationen über das Internet der Fahrzeuge.

4. Verfahren zur Übertragung von Wahrnehmungsdaten, das von einer Basisstation, ausgeführt wird, umfassend:
Empfangen (200), über einen Netzwerk-Slice, der ersten Wahrnehmungsdaten und einer entsprechenden ersten Kennung, die von einer ersten Vorrichtung gesendet werden, wobei die erste Kennung zur Identifizierung der ersten Vorrichtung verwendet wird; die ersten Wahrnehmungsdaten durch Verschlüsseln der zweiten Wahrnehmungsdaten erhalten werden oder die ersten Wahrnehmungsdaten durch Verschlüsseln und Komprimieren der zweiten Wahrnehmungsdaten erhalten werden, wobei die zweiten Wahrnehmungsdaten Wahrnehmungsdaten sind, die innerhalb eines vorgegebenen Bereichs erfasst werden, und wobei der vorgegebene Bereich ein Bereich ist, in dem der Abstand zu der ersten Vorrichtung kleiner oder gleich einem vorgegebenen Abstand ist;
Senden (201) der ersten Wahrnehmungsdaten und der ersten Kennung an einen Edge-Cloud-Server; **gekennzeichnet durch** Folgendes:
Empfangen, über einen sicheren Übertragungskanal, eines Entschlüsselungsschlüssel, der von der ersten Vorrichtung gesendet wird und der den ersten Wahrnehmungsdaten entspricht, und Senden des Entschlüsselungsschlüssels über den sicheren Übertragungskanal an den Edge-Cloud-Server; und
Empfangen einer Seriennummer, die von dem Edge-Cloud-Server gesendet wird und Senden der Seriennummer an die erste Vorrichtung über den Netzwerk-Slice, wobei die Seriennummer zum Unterscheiden der ersten Wahrnehmungsdaten verwendet wird, die von der ersten Vorrichtung in verschiedenen Zeitpunkten hochgeladen werden.

5. Verfahren zur Übertragung von Wahrnehmungsdaten nach Anspruch 4, wobei das Verfahren, nach dem Senden (201) der ersten Wahrnehmungsdaten an den Edge-Cloud-Server, ferner umfasst: Empfangen dritter Wahrnehmungsdaten und einer zweiten Kennung, die von dem Edge-Cloud-Server gesendet werden, wobei die zweite Kennung zur Identifizierung einer zweiten Vorrichtung verwendet wird; und Senden der dritten Wahrnehmungsdaten an die zweite Vorrichtung, wobei die dritten Wahrnehmungsdaten Wahrnehmungsdaten sind, die durch Durchführen einer Formatumwandlung der ersten Wahrnehmungsdaten erhalten werden;
oder das Verfahren, nach dem Senden (201) der ersten Wahrnehmungsdaten und der ersten Kennung an den Edge-Cloud-Server, ferner umfasst: Empfangen dritter Wahrnehmungsdaten, einer Seriennummer und einer zweiten Kennung, die von dem Edge-Cloud-Server gesendet werden, wobei die zweite Kennung zur Identifizierung einer zweiten Vorrichtung verwendet wird; und Senden der dritten Wahrnehmungsdaten und der Seriennummer an die zweite Vorrichtung.

6. Verfahren zur Übertragung von Wahrnehmungsdaten nach Anspruch 4, wobei Empfangen (200), über das Netzwerk-Slice, der ersten Wahrnehmungsdaten und der entsprechenden ersten Kennung, die von der ersten Vorrichtung gesendet werden, umfasst: Empfangen, über das Netzwerk-Slice, der ersten Wahrnehmungsdaten, der ersten Kennung und einer zweiten Kennung, die von der ersten Vorrichtung gesendet werden, wobei die zweite Kennung zur Identifizierung einer zweiten Vorrichtung verwendet wird; und
Senden der ersten Wahrnehmungsdaten und der ersten Kennung an den Edge-Cloud-Server umfasst: Senden der ersten Wahrnehmungsdaten, der ersten Kennung und der zweiten Kennung an den Edge-Cloud-Server.

7. Verfahren zur Übertragung von Wahrnehmungsdaten, das von einem Edge-Cloud-Server ausgeführt wird, umfassend:
Empfangen (300) erster Wahrnehmungsdaten und einer entsprechenden ersten Kennung, die von einer Basisstation gesendet werden, wobei die erste Kennung zur Identifizierung einer ersten Vorrichtung verwendet wird, wobei die ersten Wahrnehmungsdaten durch Verschlüsseln der zweiten Wahrnehmungsdaten erhalten werden, wobei die zweiten Wahrnehmungsdaten Wahrnehmungsdaten sind, die innerhalb eines vorgegebenen Bereichs erfasst werden, wobei der vorgegebene Bereich ein Bereich ist, in dem der Abstand zu der ersten Vorrichtung kleiner oder gleich einem vorgegebenen Abstand ist;
Durchführen (301) einer Formatumwandlung der ersten Wahrnehmungsdaten, um dritte Wahrnehmungsdaten zu erhalten, und Speichern (301) einer Korrelation zwischen der ersten Kennung und den dritten Wahrnehmungsdaten, wobei Durchführen (301) der Formatumwandlung der ersten Wahrnehmungsdaten, um die dritten Wahrnehmungsdaten zu erhalten, umfasst: Empfangen, über einen sicheren Übertragungskanal, eines Entschlüsselungsschlüssel, der von der Basisstation gesendet wird und der den ersten Wahrnehmungsdaten entspricht; Entschlüsseln der ersten Wahrnehmungsdaten durch Verwenden des Entschlüsselungsschlüssels, um die zweiten Wahrnehmungsdaten zu erhalten; Durchführen einer Formatumwandlung der zweiten Wahrnehmungsdaten, um vierte Wahrnehmungsdaten zu erhalten; und Verschlüsseln der vierten Wahrnehmungsdaten, um die dritten Wahrnehmungsdaten zu erhalten; und
Erzeugen einer Seriennummere, die den dritten Wahrnehmungsdaten entspricht und Senden der Seriennummer an die Basisstation, wobei die Seriennummer zum Unterscheiden der ersten Wahrnehmungsdaten verwendet wird, die zu unterschiedlichen Zeitpunkten von der ersten Vorrichtung hochgeladen werden;
wobei Speichern der Korrelation zwischen der ersten Kennung und den dritten Wahrnehmungsdaten umfasst: Speichern einer Korrelation zwischen der ersten Kennung, den dritten Wahrnehmungsdaten und der Seriennummer.

8. Verfahren zur Übertragung von Wahrnehmungsdaten nach Anspruch 7, wobei Empfangen (300) der ersten Wahrnehmungsdaten und der entsprechenden ersten Kennung, die von der Basisstation gesendet werden, umfasst: Empfangen der ersten Wahrnehmungsdaten, der ersten Kennung und einer zweiten Kennung, die von der Basisstation gesendet werden, wobei die zweite Kennung zur Identifizierung einer zweiten Vorrichtung verwendet wird;
wobei das Verfahren, nach dem Speichern der Korrelation zwischen der ersten Kennung, den dritten Wahrnehmungsdaten und der Seriennummer ferner umfasst: Senden der dritten Wahrnehmungsdaten, der Seriennummer und der zweiten Kennung an die Basisstation;
wobei das Verfahren, nach dem Speichern der Korrelation zwischen der ersten Kennung, den dritten Wahrnehmungsdaten und der Seriennummer, ferner umfasst:
Empfangen einer Wahrnehmungsdaten-Erfassungsanforderung, die von der zweiten Vorrichtung gesendet wird, wobei die Wahrnehmungsdaten-Erfassungsanforderung die erste Kennung und die zweite Kennung umfasst, wobei die erste Kennung zur Identifizierung der ersten Vorrichtung verwendet wird und die zweite Kennung zur Identifizierung der zweiten Vorrichtung verwendet wird; und
Suchen der Korrelation für die dritten Wahrnehmungsdaten und die Seriennummer, die der ersten Kennung entsprechen, und Senden der gefundenen dritten Wahrnehmungsdaten, der gefundenen Seriennummer und der zweiten Kennung an die Basisstation.

9. Verfahren zur Übertragung von Wahrnehmungsdaten nach Anspruch 7, wobei:
Empfangen (300) der ersten Wahrnehmungsdaten und der entsprechenden ersten Kennung, die von der Basisstation gesendet werden, umfasst: Empfangen der ersten Wahrnehmungsdaten, der ersten Kennung und einer zweiten Kennung, die von der Basisstation gesendet werden, wobei die zweite Kennung zur Identifizierung einer zweiten Vorrichtung verwendet wird; wobei das Verfahren, nach dem Speichern der Korrelation zwischen der ersten Kennung und den dritten Wahrnehmungsdaten, ferner umfasst: Senden der dritten Wahrnehmungsdaten und der zweiten Kennung an die Basisstation;
oder,
das Verfahren, nach dem Speichern (301) der Korrelation zwischen der ersten Kennung und den dritten Wahrnehmungsdaten ferner umfasst: Empfangen einer Wahrnehmungsdaten-Erfassungsanforderung, die von einer zweiten Vorrichtung gesendet wird, wobei die Anforderung die erste Kennung und die zweite Kennung umfasst, wobei die erste Kennung zur Identifizierung der ersten Vorrichtung verwendet wird und die zweite Kennung zur Identifizierung der zweiten Vorrichtung verwendet wird; Suchen der Korrelation für die dritten Wahrnehmungsdaten, die der ersten Kennung entspricht, und Senden der gefundenen dritten Wahrnehmungsdaten und der zweiten Kennung an die Basisstation.

10. Verfahren zur Übertragung von Wahrnehmungsdaten, das von einer zweiten Vorrichtung ausgeführt wird, umfassend:
Zugreifen (400) auf ein Netzwerk-Slice; und
Senden (401) einer Wahrnehmungsdaten-Erfassungsanforderung an eine erste Vorrichtung oder einen Edge-Cloud-Server über den Netzwerk-Slice, wobei die Wahrnehmungsdaten-Erfassungsanforderung eine erste Kennung und eine zweite Kennung umfasst, wobei die erste Kennung zur Identifizierung der ersten Vorrichtung verwendet wird und die zweite Kennung zur Identifizierung der zweiten Vorrichtung verwendet wird; und
Empfangen (402), über den Netzwerk-Slice, dritter Wahrnehmungsdaten, die von einer Basisstation gesendet werden, wobei die dritten Wahrnehmungsdaten durch Formatumwandlung der ersten Wahrnehmungsdaten erhalten werden, wobei die ersten Wahrnehmungsdaten durch Verschlüsseln der zweiten Wahrnehmungsdaten erhalten werden, wobei die zweiten Wahrnehmungsdaten Wahrnehmungsdaten sind, die innerhalb eines vorgegebenen Bereichs erfasst werden, wobei der vorgegebene Bereich ein Bereich ist, in dem der Abstand zur ersten Vorrichtung kleiner oder gleich einem vorgegebenen Abstand ist;
wobei das Verfahren, nach dem Senden (401) der Wahrnehmungsdaten-Erfassungsanforderung an die erste Vorrichtung oder den Edge-Cloud-Server über den Netzwerk-Slice, ferner umfasst: Empfangen, über das Internet der Fahrzeuge, eines Entschlüsselungsschlüssels und einer Seriennummer, die den ersten Wahrnehmungsdaten entsprechen und von der ersten Vorrichtung übertragen werden, wobei die Seriennummer zum Unterscheiden der ersten Wahrnehmungsdaten verwendet wird, die zu unterschiedlichen Zeitpunkten von der ersten Vorrichtung hochgeladen;
Empfangen (402), über den Netzwerk-Slice, der dritten Wahrnehmungsdaten, die von der Basisstation gesendet werden, umfasst: Empfangen, über den Netzwerk-Slice, der dritten Wahrnehmungsdaten und einer Seriennummer, die von der Basisstation gesendet werden; und
wobei das Verfahren, nach dem Empfangen (402), über den Netzwerk-Slice, der dritten Wahrnehmungsdaten, die von der Basisstation gesendet werden, ferner umfasst: in Fällen, in denen die Seriennummer, die über das Internet der Fahrzeuge empfangen wird und die Seriennummer, die über den Netzwerk-Slice empfangen wird, identisch sind, Entschlüsseln der dritten Wahrnehmungsdaten durch Verwenden des Entschlüsselungsschlüssels, um vierte Wahrnehmungsdaten oder sechste Wahrnehmungsdaten zu erhalten; und Entschlüsseln der sechsten Wahrnehmungsdaten, um die vierten Wahrnehmungsdaten zu erhalten.

11. Verfahren zur Übertragung von Wahrnehmungsdaten nach Anspruch 10, wobei das Verfahren, vor dem Senden (401) der Wahrnehmungsdaten-Erfassungsanforderung an die erste Vorrichtung oder den Edge-Cloud-Server über den Netzwerk-Slice, ferner umfasst:
Empfangen, über das Internet der Fahrzeuge, Verkehrsunfallinformationen, die von der ersten Vorrichtung übertragen werden und nach den zweiten Wahrnehmungsdaten bestimmt werden.

12. Erste elektronische Vorrichtung (501), umfassend:
mindestens einen Prozessor; und
einen Speicher, der mindestens ein Programm speichert, wobei das mindestens eine Programm, wenn es durch den mindestens einen Prozessor ausgeführt wird, das Verfahren zur Übertragung von Wahrnehmungsdaten nach einem der Ansprüche 1 bis 3 implementiert.

13. Basisstation (502), umfassend:
mindestens einen Prozessor; und
einen Speicher, der mindestens ein Programm speichert, wobei das mindestens eine Programm, wenn es durch den mindestens einen Prozessor ausgeführt wird, das Verfahren zur Übertragung von Wahrnehmungsdaten nach einem der Ansprüche 4 bis 6 implementiert.

14. Edge-Cloud-Server (503), umfassend:
mindestens einen Prozessor; und
einen Speicher, der mindestens ein Programm speichert, wobei das mindestens eine Programm, wenn es durch den mindestens einen Prozessor ausgeführt wird, das Verfahren zur Übertragung von Wahrnehmungsdaten nach einem der Ansprüche 7 bis 9 implementiert.

15. Zweite elektronische Vorrichtung (505), umfassend:
mindestens einen Prozessor; und
einen Speicher, der mindestens ein Programm speichert, wobei das mindestens eine Programm, wenn es durch den mindestens einen Prozessor ausgeführt wird, das Verfahren zur Übertragung von Wahrnehmungsdaten nach einem der Ansprüche 10 bis 11 implementiert.

## Revendications

1. Procédé de transmission de données de perception réalisé par un premier dispositif, comprenant : accéder (100) à une tranche de réseau ; et
envoyer (101) des premières données de perception et un premier identifiant correspondant à une station de base via la tranche de réseau, le premier identifiant étant utilisé pour identifier le premier dispositif,
le procédé comprenant en outre, avant l'envoi (101) des premières données de perception et du premier identifiant correspondant à la station de base via la tranche de réseau :
acquérir des deuxièmes données de perception dans une plage prédéfinie, la plage prédéfinie étant une plage dans laquelle la distance au premier dispositif est inférieure ou égale à une distance prédéfinie ; et chiffrer les deuxièmes données de perception pour obtenir les premières données de perception, ou chiffrer et compresser les deuxièmes données de perception pour obtenir les premières données de perception ; et **caractérisé en ce que** :
après avoir envoyé les premières données de perception et le premier identifiant correspondant à la station de base via la tranche de réseau, le procédé comprend en outre : recevoir, via la tranche de réseau, un numéro de série envoyé par la station de base, et diffuser, via l'Internet des véhicules, une clé de déchiffrement correspondant aux premières données de perception et au numéro de série ; et envoyer la clé de déchiffrement à la station de base via un canal de transmission sécurisé, le numéro de série étant utilisé pour distinguer les premières données de perception téléchargées par le premier dispositif à différents moments.

2. Le procédé de transmission de données de perception selon la revendication 1, dans lequel, avant d'envoyer les premières données de perception et le premier identifiant correspondant à la station de base via la tranche de réseau, le procédé comprend en outre :
recevoir une demande d'acquisition de données de perception envoyée par un second dispositif, la demande d'acquisition de données de perception comprenant le premier identifiant et un second identifiant, le second identifiant étant utilisé pour identifier le second dispositif ; et
l'envoi des premières données de perception et du premier identifiant correspondant à la station de base via la tranche de réseau comprend : envoyer les premières données de perception, le premier identifiant et le second identifiant à la station de base via la tranche de réseau.

3. Le procédé de transmission de données de perception selon la revendication 1, dans lequel, après avoir envoyé (101) les premières données de perception et le premier identifiant correspondant à la station de base via la tranche de réseau, le procédé comprend en outre :
déterminer des informations d'incident de circulation selon les deuxièmes données de perception, et diffuser les informations d'incident de circulation via l'Internet des véhicules.

4. Procédé de transmission de données de perception réalisé par une station de base, comprenant :
recevoir (200), via une tranche de réseau, des premières données de perception et un premier identifiant correspondant envoyés par un premier dispositif, le premier identifiant étant utilisé pour identifier le premier dispositif ; les premières données de perception étant obtenues en chiffrant des deuxièmes données de perception, ou les premières données de perception étant obtenues en chiffrant et compressant les deuxièmes données de perception, les deuxièmes données de perception étant des données de perception acquises dans une plage prédéfinie, et la plage prédéfinie étant une plage dans laquelle la distance au premier dispositif est inférieure ou égale à une distance prédéfinie ;
envoyer (201) les premières données de perception et le premier identifiant à un serveur en périphérie ; **caractérisé en ce que** :
recevoir, via un canal de transmission sécurisé, une clé de déchiffrement envoyée par le premier dispositif et correspondant aux premières données de perception, et envoyer la clé de déchiffrement au serveur en périphérie via le canal de transmission sécurisé ; et
recevoir un numéro de série envoyé par le serveur en périphérie, et envoyer le numéro de série au premier dispositif via la tranche de réseau, le numéro de série étant utilisé pour distinguer les premières données de perception téléchargées par le premier dispositif à différents moments.

5. Le procédé de transmission de données de perception selon la revendication 4, dans lequel, après avoir envoyé (201) les premières données de perception au serveur en périphérie, le procédé comprend en outre : recevoir des troisièmes données de perception et un second identifiant envoyés par le serveur en périphérie, le second identifiant étant utilisé pour identifier un second dispositif ; et envoyer les troisièmes données de perception au second dispositif, les troisièmes données de perception étant des données de perception obtenues en effectuant une conversion de format sur les premières données de perception ;
ou, après avoir envoyé (201) les premières données de perception et le premier identifiant au serveur en périphérie, le procédé comprend en outre : recevoir des troisièmes données de perception, un numéro de série et un second identifiant envoyés par le serveur en périphérie, le second identifiant étant utilisé pour identifier un second dispositif ; et envoyer les troisièmes données de perception et le numéro de série au second dispositif.

6. Le procédé de transmission de données de perception selon la revendication 4, dans lequel la réception (200), via la tranche de réseau, des premières données de perception et du premier identifiant correspondant envoyés par le premier dispositif comprend : recevoir, via la tranche de réseau, les premières données de perception, le premier identifiant et un second identifiant envoyés par le premier dispositif, le second identifiant étant utilisé pour identifier un second dispositif ; et
l'envoi des premières données de perception et du premier identifiant au serveur en périphérie comprend :envoyer les premières données de perception, le premier identifiant et le second identifiant au serveur en périphérie.

7. Procédé de transmission de données de perception réalisé par un serveur en périphérie, comprenant :
recevoir (300) des premières données de perception et un premier identifiant correspondant envoyés par une station de base, le premier identifiant étant utilisé pour identifier un premier dispositif, les premières données de perception étant obtenues en chiffrant des deuxièmes données de perception, les deuxièmes données de perception étant des données de perception acquises dans une plage prédéfinie, et la plage prédéfinie étant une plage dans laquelle la distance au premier dispositif est inférieure ou égale à une distance prédéfinie ;
effectuer (301) une conversion de format sur les premières données de perception pour obtenir des troisièmes données de perception, et stocker (301) une corrélation entre le premier identifiant et les troisièmes données de perception, l'étape d'effectuer (301) une conversion de format sur les premières données de perception pour obtenir les troisièmes données de perception comprenant : recevoir, via un canal de transmission sécurisé, une clé de déchiffrement envoyée par la station de base et correspondant aux premières données de perception ; déchiffrer les premières données de perception en utilisant la clé de déchiffrement pour obtenir les deuxièmes données de perception ; effectuer une conversion de format sur les deuxièmes données de perception pour obtenir des quatrièmes données de perception ; et chiffrer les quatrièmes données de perception pour obtenir les troisièmes données de perception ; et
générer un numéro de série correspondant aux troisièmes données de perception, et envoyer le numéro de série à la station de base, le numéro de série étant utilisé pour distinguer les premières données de perception téléchargées par le premier dispositif à différents moments ;
le stockage de la corrélation entre le premier identifiant et les troisièmes données de perception comprenant : stocker une corrélation entre le premier identifiant, les troisièmes données de perception et le numéro de série.

8. Le procédé de transmission de données de perception selon la revendication 7, dans lequel la réception (300) des premières données de perception et du premier identifiant correspondant envoyés par la station de base comprend : recevoir les premières données de perception, le premier identifiant et un second identifiant envoyés par la station de base, le second identifiant étant utilisé pour identifier un second dispositif ;
après avoir stocké la corrélation entre le premier identifiant, les troisièmes données de perception et le numéro de série, le procédé comprend en outre : envoyer les troisièmes données de perception, le numéro de série et le second identifiant à la station de base ;
après avoir stocké la corrélation entre le premier identifiant, les troisièmes données de perception et le numéro de série, le procédé comprend en outre :
recevoir une demande d'acquisition de données de perception envoyée par le second dispositif, la demande d'acquisition de données de perception comprenant le premier identifiant et le second identifiant, le premier identifiant étant utilisé pour identifier le premier dispositif, et le second identifiant étant utilisé pour identifier le second dispositif ; et
rechercher dans la corrélation les troisièmes données de perception et le numéro de série correspondant au premier identifiant, et envoyer les troisièmes données de perception trouvées, le numéro de série trouvé et le second identifiant à la station de base.

9. Le procédé de transmission de données de perception selon la revendication 7, dans lequel :
la réception (300) des premières données de perception et du premier identifiant correspondant envoyés par la station de base comprend : recevoir les premières données de perception, le premier identifiant et un second identifiant envoyés par la station de base, le second identifiant étant utilisé pour identifier un second dispositif ; après avoir stocké la corrélation entre le premier identifiant et les troisièmes données de perception, le procédé comprend en outre : envoyer les troisièmes données de perception et le second identifiant à la station de base ;
ou,
après avoir stocké (301) la corrélation entre le premier identifiant et les troisièmes données de perception, le procédé comprend en outre : recevoir une demande d'acquisition de données de perception envoyée par un second dispositif, la demande d'acquisition de données de perception comprenant un premier identifiant et un second identifiant, le premier identifiant étant utilisé pour identifier le premier dispositif, et le second identifiant étant utilisé pour identifier le second dispositif ; rechercher dans la corrélation les troisièmes données de perception correspondant au premier identifiant, et envoyer les troisièmes données de perception trouvées et le second identifiant à la station de base.

10. Procédé de transmission de données de perception réalisé par un second dispositif, comprenant :
accéder (400) à une tranche de réseau ; et
envoyer (401) une demande d'acquisition de données de perception à un premier dispositif ou à un serveur en périphérie via la tranche de réseau, la demande d'acquisition de données de perception comprenant un premier identifiant et un second identifiant, le premier identifiant étant utilisé pour identifier le premier dispositif, et le second identifiant étant utilisé pour identifier le second dispositif ; et
recevoir (402), via la tranche de réseau, des troisièmes données de perception envoyées par une station de base, les troisièmes données de perception étant des données de perception obtenues en effectuant une conversion de format sur les premières données de perception, les premières données de perception étant obtenues en chiffrant des deuxièmes données de perception, les deuxièmes données de perception étant des données de perception acquises dans une plage prédéfinie, et la plage prédéfinie étant une plage dans laquelle la distance au premier dispositif est inférieure ou égale à une distance prédéfinie ;
le procédé comprenant en outre, après l'envoi (401) de la demande d'acquisition de données de perception au premier dispositif ou au serveur en périphérie via la tranche de réseau : recevoir, via l'Internet des véhicules, une clé de déchiffrement et un numéro de série correspondant aux premières données de perception et diffusés par le premier dispositif, le numéro de série étant utilisé pour distinguer les premières données de perception téléchargées par le premier dispositif à différents moments ;
la réception (402), via la tranche de réseau, des troisièmes données de perception envoyées par la station de base comprenant : recevoir, via la tranche de réseau, les troisièmes données de perception et un numéro de série envoyés par la station de base ; et
après avoir reçu (402), via la tranche de réseau, les troisièmes données de perception envoyées par la station de base, le procédé comprenant en outre : dans les cas où le numéro de série reçu via l'Internet des véhicules et le numéro de série reçu via la tranche de réseau sont identiques, déchiffrer les troisièmes données de perception en utilisant la clé de déchiffrement pour obtenir des quatrièmes données de perception ou des sixièmes données de perception ; et déchiffrer les sixièmes données de perception pour obtenir les quatrièmes données de perception.

11. Le procédé de transmission de données de perception selon la revendication 10, dans lequel, avant d'envoyer (401) la demande d'acquisition de données de perception au premier dispositif ou au serveur en périphérie via la tranche de réseau, le procédé comprend en outre :
recevoir, via l'Internet des véhicules, des informations d'incident de circulation diffusées par le premier dispositif et déterminées selon les deuxièmes données de perception.

12. Premier dispositif électronique (501), comprenant :
au moins un processeur ; et
une mémoire stockant au moins un programme, le ou lesdits programmes, lorsqu'ils sont exécutés par le ou lesdits processeurs, mettant en œuvre le procédé de transmission de données de perception selon l'une quelconque des revendications 1 à 3.

13. Station de base (502), comprenant :
au moins un processeur ; et
une mémoire stockant au moins un programme, le ou lesdits programmes, lorsqu'ils sont exécutés par le ou lesdits processeurs, mettant en œuvre le procédé de transmission de données de perception selon l'une quelconque des revendications 4 à 6.

14. Serveur en périphérie (503) comprenant :
au moins un processeur ; et
une mémoire stockant au moins un programme, le ou lesdits programmes, lorsqu'ils sont exécutés par le ou lesdits processeurs, mettant en œuvre le procédé de transmission de données de perception selon l'une quelconque des revendications 7 à 9.

15. Second dispositif électronique (505), comprenant :
au moins un processeur ; et
une mémoire stockant au moins un programme, le ou lesdits programmes, lorsqu'ils sont exécutés par le ou lesdits processeurs, mettant en œuvre le procédé de transmission de données de perception selon l'une quelconque des revendications 10 à 11.
